# EUROPÄISCHE PATENTSCHRIFT

(11) **EP 0 513 277 B1**
(45) Veröffentlichungstag und Bekanntmachung des Hinweises auf die Patenterteilung: **16.08.1995**
(21) Anmeldenummer: 91920216.8
(22) Anmeldetag: 26.11.1991
(51) Int. Cl.: F16H 59/02, G05G 9/02

(54) **MECHANISCHE SCHALTEINRICHTUNG**
MECHANICAL SHIFTING DEVICE
MECANISME DE COMMANDE

(30) Priorität: 30.11.1990 DE 4038278
(43) Veröffentlichungstag der Anmeldung: 19.11.1992
(73) Patentinhaber: Clark Equipment Company, South Bend Indiana 46634 (US)
(72) Erfinder: PECCEU, Hendrik, B-8840 Oostnieuwkerke (BE)
(74) Vertreter: Rehberg, Elmar, Dipl.-Ing.
(86) Internationale Anmeldenummer: EP9102222
(87) Internationale Veröffentlichungsnummer: WO9209832

(56) Entgegenhaltungen:
- EP-A- 0 116 815
- DE-A- 3 238 048
- US-A- 3 172 300
- US-A- 3 585 319
- US-A- 3 776 058

## Beschreibung

Die Erfindung bezieht sich auf eine mechanische Schalteinrichtung mit einem Gehäuse und einer darin in einem Käfig gelagerten Kugel, an der ein eingangsseitiger Schalthebel radial abstehend angeordnet und starr befestigt ist, der zusammen mit der Kugel zwei Rotationsbewegungen um aufeinander senkrecht stehende, durch den Mittelpunkt der Kugel gehende Achsen ausführen kann, wobei ausgangsseitig zwei separate Übertragungselemente vorgesehen sind, die stiftförmig ausgebildet, mit ihren Achsen parallel zueinander angeordnet und mit der Kugel über je ein Verbindungselement verbunden sind, wobei die beiden Verbindungselemente so ausgebildet und zueinander angeordnet sind, daß das erste Verbindungselement bei der Rotationsbewegung des Schalthebels um die eine Achse das erste Übertragungselement betätigt und gleichzeitig das zweite Verbindungselement das zweite Übertragungselement nicht betätigt, während es bei der zweiten Rotationsbewegung des Schalthebels um die andere Achse umgekehrt ist. Solche mechanischen Schalteinrichtungen werden beispielsweise zum Schalten von Getrieben von Baumaschinen, insbesondere Radladern, Baggern u. dgl. eingesetzt. Solche Baumaschinen und entsprechende Fahrzeuge weisen ein Schalt- und/oder Arbeitsgetriebe auf, welches mehrere Vorwärtsgänge und mehrere Rückwärtsgänge besitzt, so daß für die Bedienungsperson die Möglichkeit gegeben sein muß, zunächst einmal die allgemeine Fahrtrichtung Vorwärts oder Rückwärts vorwählen zu können, um dann aus dieser ersten Position heraus, beispielsweise aus der Vorwärtsfahrt, die betreffenden Vorwärtsgänge in aufsteigender oder fallender Linie benutzen zu können, ohne daß dabei die Gefahr besteht, daß zwischendurch versehentlich ein Rückwärtsgang eingeschaltet wird.

Eine mechanische Schalteinrichtung ist im PKW-Bereich bekannt, um den Außenspiegel um seine zwei Schwenkachsen zu verkippen und so letztlich die Einstellung des Außenspiegels im gewünschten Raumwinkel herbeiführen zu können. Dabei weist die Schalteinrichtung ein Gehäuse auf, in dem in einem Käfig eine Kugel allseits schwenkbar bzw. drehbar gelagert ist. Mit der Kugel ist ein Schalthebel starr verbunden, wobei die Bewegungsmöglichkeiten des Schalthebels und damit auch der Kugel durch eine Schaltkulisse entsprechend deren Ausbildung beschränkt sind. Bei der bekannten Schalteinrichtung zum Verstellen des Außenspiegels kann der Schalthebel aus einer neutralen Mittelstellung heraus in zwei aufeinander senkrecht stehenden Ebenen, die sich in der Achse des Schalthebels schneiden, verschwenkt werden. Es sind vier einzelne Positionen erreichbar, um die vier geforderten Bewegungen des Außenspiegels herbeizuführen. Dabei sind die beiden jeweils in einer der Ebenen angeordneten Positionen gegenläufigen Bewegungen zugeordnet. Um letztendlich die betreffende Schwenkbewegung des Außenspiegels herbeizuführen, sind elektrische Kontakte im Bereich des Schalthebels und damit auch im Gehäuse der Schalteinrichtung angeordnet, die in der jeweiligen Verschwenkposition durch den Schalthebel betätigt werden. Die elektrischen Kontakte können auf der Seite des Schalthebels, an der dieser aus der Kugel radial herausragt, vorgesehen sein. Es ist aber auch möglich, auf der anderen Seite der Kugel, mit der Achse des Schalthebels fluchtend, einen Fortsatz vorzusehen, der seinerseits die betreffenden vier Schaltkontakte betätigt. Nachteilig an dieser Schalteinrichtung ist es, daß die elektrischen Schaltkontakte direkt in Nachbarschaft des Schalthebels und damit im Gehäuse der mechanischen Schalteinrichtung angeordnet sind. Die elektrischen Schaltkontakte sind somit räumlich nicht getrennt von den mechanischen Teilen der Schalteinrichtung. Wenn die Schaltkulisse beispielsweise kreuzförmig ausgebildet ist, läßt sich jede der vier Schaltpositionen nur aus der neutralen Mittelstellung heraus erreichen, d. h. es ist nicht möglich, beispielsweise auf ein Fahrgetriebe, zunächst die allgemeine Fahrtrichtung Vorwärts oder Rückwärts vorzuwählen und dann aus dieser Position heraus einen betreffenden anderen Vorwärts- oder einen anderen Rückwärtsgang zu wählen.

Eine gattungsgemäße Schalteinrichtung ist aus der US-A-3 585 319 bekannt. Als Verbindungselemente finden zwei Hebelarme Verwendung, die aufeinander senkrecht stehend angeordnet sind und deren Achsen durch den Mittelpunkt der Kugel weisen. Die beiden Verbindungselemente sind damit derart ausgebildet und zueinander angeordnet, daß das erste Verbindungselement bei der Rotationsbewegung des Schalthebels um die eine Achse das erste Übertragungselement betätigt und gleichzeitig das zweite Verbindungselement das zweite Übertragungselement nicht betätigt, während es bei der zweiten Rotationsbewegung des Schalthebels um die andere Achse umgekehrt ist. Die beiden Übertragungselemente können damit unabhängig voneinander betätigt werden. Allerdings ergibt sich bei dieser Anordnung der Nachteil, daß es nur möglich ist eines der Übertragungselemente zu betätigen, wenn sich das jeweils andere Übertragungselement, d. h. damit auch der Schalthebel und das entsprechende Verbindungselement, in einer definierten Neutralstellung befindet. Es ist also insbesondere nicht möglich, das eine Übertragungselement durch Rotation des Schalthebels um die eine Achse zu betätigen und aus dieser Stellung heraus eine Rotation um die zweite Achse vorzunehmen, um gleichzeitig das zweite Übertragungselement zu betätigen. Damit ist diese mechanische Schalteinrichtung für eine Vielzahl von Anwendungen, bei denen die aufeinanderfolgende bzw. simultane Betätigung zweier Übertragungselemente gefordert ist, z. B. die Steuerung eines Fahrgetriebes mit einer zunächst vorzunehmenden Wahl der allgemeinen Fahrtrichtung (vorwärts oder rückwärts) und der darauffolgenden Wahl der entsprechenden Fahrstufe (verschiedene Gänge für verschiedene Fahrgeschwindigkeiten), vollkommen ungeeignet.

Die Erfindung geht von der eingangs geschilderten Problematik aus und bemüht sich, eine Schalteinrichtung bereitzustellen, bei der über einen eingangsseitigen Schalthebel Bewegungen eingeleitet und ausgangsseitig abgenommen bzw. weitergeleitet werden können, wobei gleichzeitig und ausgangsseitig unabhängig voneinander zwei Arten von Bewegungen entstehen. Am Beispiel erläutert soll die erste Art der Bewegungen z. B. der Vorwärts- und der Rückwärtsfahrt zugeordnet sein, während die zweite Art der Bewegung der Erhöhung bzw. der Erniedrigung der jeweiligen Gangzahl in Vorwärts- bzw. in Rückwärtsfahrt zugeordnet ist. Dabei soll eine sinnfällige Bewegung des Schalthebels z. B. bei Erhöhung der Gangzahl, also beim Heraufschalten in der gleichen Richtung möglich sein, unabhängig davon, ob zuvor als allgemeine Fahrtrichtung die Vorwärts- oder die Rückwärtsfahrt gewählt wurde. Wichtig ist weiterhin, die ausgangsseitigen Bewegungen so weiterzuleiten, daß nachgeordnete elektrische Schalter, elektronische Steuerelemente usw. räumlich getrennt von den mechanischen Teilen der Schalteinrichtung und damit in einem gesonderten Gehäuse zusätzlich zu dem Gehäuse der mechanischen Schalteinrichtung untergebracht werden können.

Erfindungsgemäß wird dies bei der mechanischen Schalteinrichtung der eingangs beschriebenen Art dadurch erreicht, daß das zweite Übertragungselement mit seiner Achse durch den Mittelpunkt der Kugel weisend angeordnet ist, daß das Verbindungselement dieses zweiten Übertragungselements im Bereich des Mittelpunkts der Kugel angeordnet ist, und daß das erste Übertragungselement eine Translationsbewegung in Richtung seiner Achse und das zweite Übertragungselement eine Rotationsbewegung um seine Achse ausführt. Eingangsseitig greift an der Kugel nur ein Schalthebel an, dessen Bewegungsmöglichkeiten in Verbindung mit einer Schaltkulisse so begrenzt sind, daß er zwei Rotationsbewegungen um zwei aufeinander senkrecht stehende, durch den Mittelpunkt der Kugel gehende Ebenen ausführen kann. Dabei ergibt sich die Möglichkeit, daß der Schalthebel zwei Schwenkbewegungen ausführen kann, also Rotationsbewegungen um zwei solche zueinander senkrecht stehende Achsen, bei denen keine der Achsen mit der Achse des Schalthebels selbst zusammenfällt. In diesem Fall bilden die beiden Achsen, um die die Rotationen möglich sind und die Achse des Schalthebels zusammen ein räumliches Achsensystem. Es ist aber auch möglich, daß eine der beiden Rotationsbewegungen die Rotationsbewegung des Schalthebels um seine eigene Achse ist. In diesem Fall bekommt die Schaltkulisse langlochartige Schlitzform. Die Schaltkulisse kann zwischen dem Schalthebel und dem Gehäuse der Steuereinrichtung oder auch von Teilen des Käfigs, in welchem die Kugel gelagert ist, gebildet werden. Wesentlich ist es, dem eingangsseitigen Schalthebel mit seinen beiden Bewegungsmöglichkeiten zwei ausgangsseitig angeordnete Übertragungselemente zuzuordnen, wobei das eine Übertragungselement nur Bewegungen entsprechend der einen Rotationsbewegung des Schalthebels und das andere Übertragungselement nur Bewegungen der anderen Rotationsbewegung des Schalthebels weiterleitet. Diese Weiterleitung muß darüberhinaus in unabhängiger Weise erfolgen. Dies bedeutet am Beispiel, daß eine Rotationsbewegung am Schalthebel, mit der beispielsweise die Gangzahl erniedrigt werden soll, unabhängig davon möglich sein soll, ob in der betreffenden Fahrsituation Vorwärtsfahrt oder Rückwärtsfahrt vorliegt. In beiden Fällen muß die Erniedrigung der Gangzahl eintreten.

Die Anordnung der zwei ausgangsseitigen, separaten Übertragungselemente mit ihren Achsen parallel zueinander erbringt die Möglichkeit, diese Übertragungselemente vergleichsweise lang als Stifte, Schieber u. dgl. auszubilden und so parallel zueinander nach einer Richtung von der Kugel wegzuführen, so daß sie durch die Wandung des Gehäuses der Schalteinrichtung hindurch und durch die Wandung eines zweiten Gehäuses ebenfalls hindurchgeführt werden können, wobei eine einfache Abdichtung im Bereich der beiden durchsetzten Gehäusewandungen möglich ist. Damit ergibt sich der Vorteil, daß nachgeschaltete elektronische Schalt- und Steuerelemente in dem zweiten Gehäuse getrennt und geschützt von den mechanischen Teilen im ersten Gehäuse, also dem Gehäuse der Schalteinrichtung, untergebracht werden können.

Zwischen der Kugel und jedem der beiden ausgangsseitigen Übertragungselementen ist jeweils ein Verbindungselement angeordnet. Die Ausbildung der Verbindungselemente, ihre Anordnung sowie die Anordnung der Übertragungselemente relativ zur Kugel sind aufeinander abgestimmt, und zwar derart, daß die beiden Verbindungselemente, bezogen auf die beiden Rotationsbewegungen des eingangsseitigen Steuerhebels, wechselweise das entsprechende Übertragungselement entweder betätigen oder nicht betätigen. Dies bedeutet, daß bei der einen Rotationsbewegung des Steuerhebels nur eines der beiden ausgangsseitigen Übertragungselemente eine Bewegung durchführt bzw. weiterleitet, während das andere Übertragungselement keine Bewegung zeigt und somit stillsteht. Bei der zweiten Rotationsbewegung des Schalthebels ist es dann umgekehrt. Diese Zuordnung ist noch von der Kulissenausbildung in der Weise überlagert, daß eine eindeutige Reihenfolge aus der mittleren Neutralstellung heraus möglich ist. Zuerst ist beispielsweise aus der mittleren Neutralstellung heraus nur die erste Rotationsbewegung möglich, die der Wahl der allgemeinen Fahrtrichtung Vorwärts oder Rückwärts zugeordnet ist. Erst, wenn eine dieser beiden allgemeinen Fahrtrichtungspositionen gewählt ist, wird die zweite Rotationsmöglichkeit des Steuerhebels möglich, während gleichzeitig die erste Rotationsmöglichkeit gesperrt wird. Es ist dann möglich, die Anzahl der Gänge zu erhöhen oder zu erniedrigen. Während dieser zweiten Rotationsbewegung besteht kein Möglichkeit, die allgemeine Fahrtrichtung Vorwärts oder Rückwärts zu wechseln.

Die beiden ausgangsseitig angeordneten separaten Übertragungselemente führen demnach unterschiedliche Bewegungen aus. Die jeweiligen Bewegungen der Übertragungselemente werden bei entsprechender Betätigung des Schalthebels mittels der beiden Verbindungselemente an die Übertragungselemente weitergegeben. Die Verbindungselemente sind dabei derart gestaltet, daß sie die Rotationsbewegung des Schalthebels nur bei dessen Rotation um eine Achse weiterleiten, während bei der Rotation des Schalthebels um eine zu der ersten Achse senkrecht verlaufenden zweiten Achse keine Wirkung an das entsprechende Übertragungselement weiterleiten. Das zweite Übertragungselement ist mit seiner Achse durch den Mittelpunkt der Kugel weisend angeordnet, und das Verbindungselement dieses zweiten Übertragungselements ist im Bereich des Mittelpunkts der Kugel angeordnet. Dieses zweite Übertragungselement führt eine Rotationsbewegung, nicht aber eine Translationsbewegung aus. Die Rotationsbewegung wird nur dann ausgeführt, wenn die Achse, um die der Schalthebel rotiert, mit der Achse dieses Übertragungselements zusammenfällt. Das erste Übertragungselement ist mit seiner Achse derart angeordnet, daß diese Achse eben nicht durch den Mittelpunkt der Kugel weist, daß dessen Achse aber dennoch parallel zu der Achse des zweiten Übertragungselements verläuft. Aus einer derartigen Anordnung der beiden Übertragungselemente bzw. der entsprechenden Verbindungselemente ergibt sich in vorteilhafter Weise, daß eine Überlagerung der Bewegungen der beiden Übertragungselemente möglich wird. Dies bedeutet, daß das zweite Übertragungselement auch dann betätigt werden kann, wenn das erste Übertragungselement bereits aus seiner Ruhelage ausgelenkt ist, und zwar ohne das erste Übertragungselement dabei weiter zu betätigen. Dadurch läßt sich, beispielsweise bei einem Fahrgetriebe, zunächst durch eine Translationsbewegung des ersten Übertragungselements die allgemeine Fahrtrichtung groß vorwärts und groß rückwärts vorwählen und dann durch Rotationsbewegung des zweiten Übertragungselements aus dieser Position heraus ein betreffender anderer Vorwärts- oder Rückwärtsgang wählen. Wenn von einer Rotationsbewegung die Rede ist, dann ist hier immer eine Schwenkbewegung oder eine Drehbewegung um die eigene Achse in begrenztem Ausmaß gemeint, also niemals eine Rotationsbewegung um mehr als 360°, sondern immer eine Schwenkbewegung in einem vergleichsweise kleinen Winkelbereich von vielleicht bis zu maximal 45° oder 90°. Die Festlegung der Bezeichnung der ersten und des zweiten Übertragungselements, und der entsprechenden Verbindungselemente, ist nicht zwingend, so daß die umgekehrte Anordnung der Übertragungselemente gleichbedeutend ist, d. h. daß das erste Übertragungselement eine Rotationsbewegung um seine Achse und das zweite Übertragungselement eine Translationsbewegung in Richtung seiner Achse ausführt. Es ist aber auch möglich, daß beide Übertragungselemente Rotationsbewegungen durchführen.

Das Verbindungselement des zweiten Übertragungselements kann als Gelenk, als Drehfeder oder als Faltenbalg ausgebildet sein. Aus diesen konstruktiven Möglichkeiten geht hervor, daß dieses Verbindungselement sehr einfach ausgebildet sein kann. Auch hierauf zielt die vorliegende Erfindung ab. Ein solches Gelenk, Drehfeder oder Faltenbalg hat bei Rotationsbewegungen um seine bzw. die Achse des Übertragungselements Betätigungsfunktion, während eine Rotationsbewegung um eine dazu senkrecht stehende Achse keine Betätigung nach sich zieht.

Das erste Übertragungselement muß dann mit seiner Achse außerhalb des Mittelpunkts der Kugel angeordnet sein; das zugehörige erste Verbindungselement dieses Übertragungselements ist zwischen einer Oberfläche der Kugel und das erste Übertragungselement eingeschaltet. Es kann sich dabei direkt um die Oberfläche der Kugel in dem Käfig handeln oder um ein Stück einer weiteren Oberfläche einer z. B. im Radius größeren Kugeloberfläche, die mit der Kugel, an welchem der Steuerhebel sitzt, starr verbunden ist. Dieses erste Verbindungselement muß so ausgebildet sein, daß es gerade dann Betätigungsfunktion hat, wenn das Verbindungselement des zweiten Übertragungselements keine Betätigungsfunktion hat und umgekehrt.

Dies läßt sich in konstruktiv sehr einfacher Weise dadurch erreichen, daß das Verbindungselement des ersten Übertragungselements von einer bogenförmigen Rippe auf der Oberfläche der Kugel und einer Nut in dem ersten Übertragungselement gebildet ist, wobei die Achse der bogenförmigen Rippe, also die Achse, um die die bogenförmige Rippe relativ zur Kugel angeordnet ist, mit der Achse des zweiten Übertragungselements zusammenfällt. Wenn also das zweite Übertragungselement eine Rotationsbewegung ausführt, rutscht die bogenförmige Rippe lediglich in der Nut des ersten Übertragungselements entlang, ohne daß das erste Übertragungselement irgendeine Bewegung ausführt.

Die bogenförmige Rippe kann als gesondertes Teil mit der Kugel verbunden sein und auf größerem Radius als die Innenseite des Käfigs angeordnet sein. Nur, wenn eines der Übertragungselemente mit seiner Achse durch den Mittelpunkt der Kugel zeigend angeordnet ist und das andere Übertragungselement mit seiner Achse parallel dazu angeordnet ist, ergibt sich die Möglichkeit, ohne ein Eckgelenk oder ohne die Verwendung von Zahnrädern zwei voneinander unabhängige Bewegungen auf der Ausgangsseite zu erreichen, bei der die eine Bewegung eine Rotationsbewegung und die andere Bewegung eines Translationsbewegung ist. Zwar ist es möglich, die beiden Übertragungselemente so anzuordnen, daß keines mit seiner Achse durch den Mittelpunkt der Kugel weisend vorgesehen ist. In einem solchen Fall müssen aber die Achsen der beiden Übertragungselemente senkrecht zueinander stehen, so daß diese beiden Bewegungen nur unter Verwendung eines Eckgetriebes, von Zahnrädern u. dgl. dann wiederum in eine gleiche Richtung in ein zweites Gehäuse weitergeleitet werden können.

Die Kugel der Schalteinrichtung kann zwei Fortsätze zur wahlweisen Verbindung mit dem Schalthebel aufweisen, deren Achsen um 90° gegeneinander versetzt angeordnet sind. Insoweit besteht die Möglichkeit, weitgehend identische Teile der Schalteinrichtung zu verwenden und trotzdem den Schalthebel wahlweise an dem einen oder dem anderen Fortsatz der Kugel zu befestigen. Im einen Fall führt der Schalthebel zwei Rotationsbewegungen um zwei Achsen aus, die beide senkrecht auf seiner eigenen Achse stehen. Im anderen Fall ist eine der beiden Rotationsbewegungen eine Drehbewegung um die eigene Achse des Schalthebels. Trotz dieser beiden Möglichkeiten ändert sich ausgangsseitig nichts.

Beide Übertragungselemente können zweckmäßig durch eine Wandung des Gehäuses der Schalteinrichtung dichtend hindurchgeführt werden. Die Abdichtung gestaltet sich dann konstruktiv sehr einfach. Beispielsweise genügt es, entsprechende O-Ringe anzuordnen. Trotz dieser fluchtenden Anordnung und des Hindurchreichens der Übertragungselemente durch die Wand des Gehäuses und ggf. eine Wand eines zweiten Gehäuses werden die Rotationsbewegungen des eingangsseitigen Schalthebels in den beiden aufeinander senkrecht stehenden Ebenen hierdurch nicht behindert.

Die Kugel kann zweckmäßig auf einer Feder abgestützt sein, deren der Kugel abgewandtes Ende beweglich am Gehäuse in Rastvertiefungen geführt ist. Damit ergibt sich zum einen vorteilhaft eine weitgehend spielfreie Lagerung der Kugel, da sie durch die Feder im Käfig immer einseitig angepreßt wird. Zum anderen zeigen die Rastvertiefungen der Bedienungsperson das ordnungsgemäße Erreichen der gewünschten Position an.

Mehrere Ausführungsbeispiele der mechanischen Schalteinrichtung sind in den Zeichnungen dargestellt und werden im Folgenden erläutert. Es zeigen:
- Figur 1: einen Vertikalschnitt durch eine erste Ausführungsform der Schalteinrichtung,
- Figur 2: einen Schnitt gemäß der Linie II-II in Figur 1,
- Figur 3: einen Schnitt gemäß den Linien III-III in den Figuren 1 und 2,
- Figur 4: einen Horizontalschnitt durch eine zweite Ausführungsform der Schalteinrichtung,
- Figur 5: einen Schnitt gemäß der Linie V-V in Figur 4,
- Figur 6: einen Schnitt gemäß den Linien VI-VI in den Figuren 4 und 5,
- Figur 7: eine Einzeldarstellung eines als Verbindungselement wirkenden Gelenks in Ansicht und
- Figur 8: die zu Figur 7 gehörige Draufsicht.

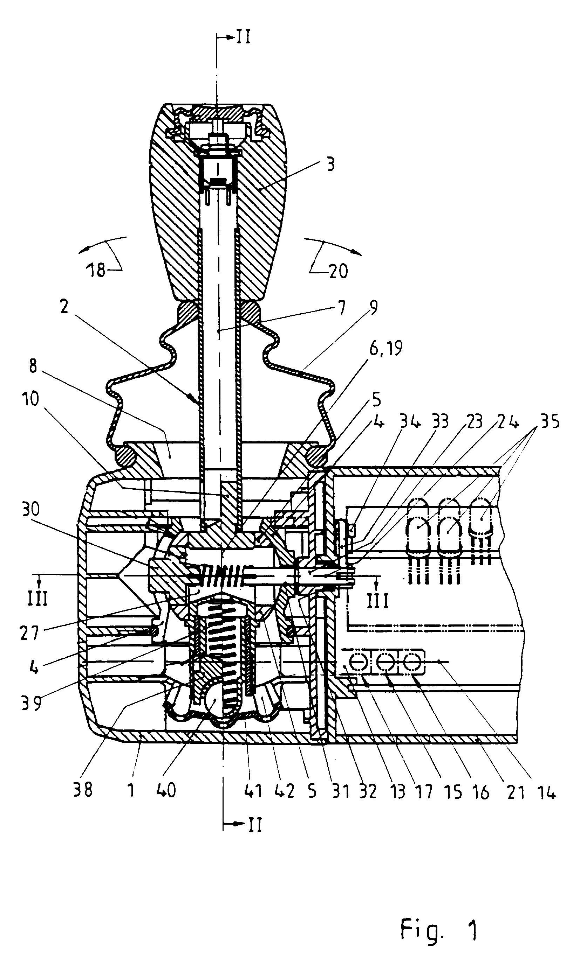

Die in den Figuren 1 bis 3 dargestellte Schalteinrichtung weist ein Gehäuse 1 auf, in welchem sämtliche mechanischen Teile der Schalteinrichtung untergebracht sind. Es versteht sich, daß ein zugehöriger Schalthebel 2 mit Griffknopf 3 aus dem Gehäuse 1 nach außen geführt ist, um eine eingangsseitige Betätigung zu ermöglichen. Im Innenraum des Gehäuses 1 ist ein Käfig 4 untergebracht, der in mehreren Raumrichtungen, wie dargestellt, durchbrochen ausgebildet ist und eine innere Kugeloberfläche bildet, in welcher eine Kugel 5 gelagert ist. Die Kugel 5 ist weitgehend als Hohlkugel ausgebildet und besitzt ebenfalls Durchbrechnungen in verschiedenen Raumrichtungen. Die Kugel 5 und der Käfig 4 besitzen einen gemeinsamen Mittelpunkt 6. Der Schalthebel 2 weist eine Achse 7 auf, die durch den Mittelpunkt 6 der Kugel 5 geht. Das Gehäuse 1 und/oder der Käfig 4 besitzt eine H-förmige Ausnehmung 8, die eine Schaltkulisse für die möglichen Bewegungen des Schalthebels 2 bildet. Die Ausnehmung 8 ist durch einen Faltenbalg 9 geschützt abgedeckt. Mit der Kugel 5 ist ein Ansatzstück 10 verbunden, welches der Befestigung des Schalthebels 2 an der Kugel 5 dient.

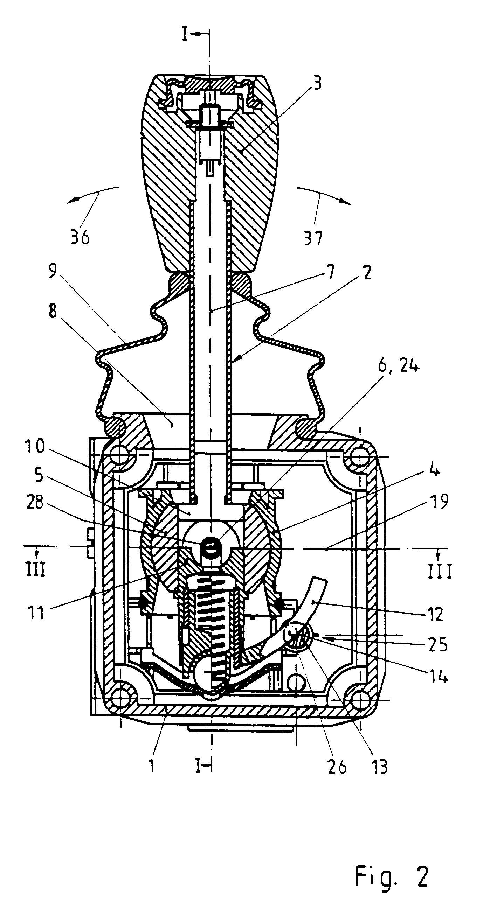

Wie insbesondere Figur 2 erkennen läßt, ist mit der Kugel 5 ein Fortsatzstück 11 verbunden, welches an der dem Schalthebel 2 entgegengesetzten Seite aus der Kugel 5 herausgeführt ist und eine bogenförmige Rippe 12 trägt, die im wesentlichen mit kreisförmigem Querschnitt frei ausragend angeordnet ist und insoweit gleichsam auf größerem Radius die Oberfläche der Kugel 5 nachahmt. Statt der bogenförmigen Rippe 12 wäre es auch möglich, unmittelbar die Oberfläche der Kugel 5 zu benutzen, jedoch ergeben sich dann Schwierigkeiten in konstruktiver Anordnung auf so kleinem Raum.

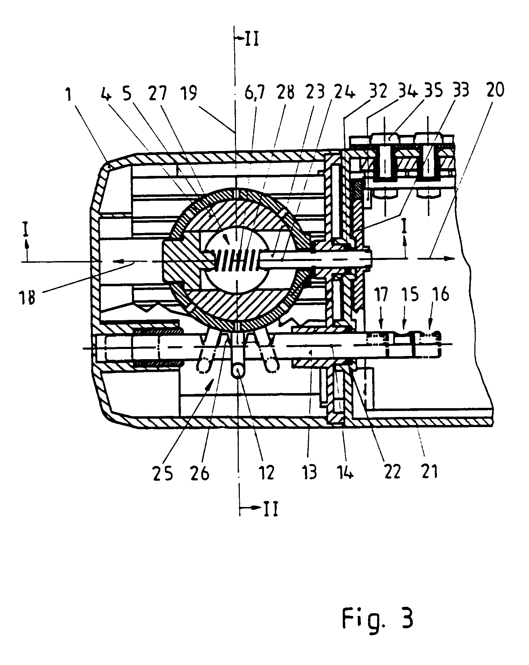

Die bogenförmige Rippe 12 ist einem ersten Übertragungselement 13 zugeordnet, welches am besten in Figur 3 erkennbar ist. Das Übertragungselement 13 ist stiftförmig ausgebildet und im Gehäuse 1 so gelagert, daß es eine Translationsbewegung in Richtung seiner Achse 14 ausführen kann. Die verschiedenen Stellungen sind in Figur 1 und 3 durch doppelt gepunktete, gestrichelte Linienführung angedeutet. Es ist eine neutrale Mittelstellung 15, eine erste Translationsstellung 16 und eine Translationsstellung 17 angedeutet, wobei die erste Translationsstellung 16 der Vorwärtsfahrt und die zweite Translationsstellung 17 der Rückwärtsfahrt zugeordnet sein mag. Anhand der Figuren 1 bis 3 ist bereits erkennbar, daß aus der dargestellten neutralen Mittelstellung 15 des Übertragungselements 13 die erste Translationsstellung 16 des Übertragungselements 13 dadurch erreichbar ist, daß der Schalthebel 2 in einer ersten Ebene I, die der Zeichenebene gemäß Figur 1 entspricht, gemäß Pfeil 18 in einer Rotationsbewegung um eine senkrecht zur Ebene I durch den Mittelpunkt 6 der Kugel 5 gehende Achse 19 verschwenkt wird. In entgegengesetzter Schwenkrichtung gemäß Pfeil 20 um die gleiche Achse 19 ergibt sich die zweite Translationsstellung 17, die der Rückwärtsfahrt zugeordnet sein möge. Es versteht sich, daß den Translationsstellungen 16 und 17 entsprechende elektrische Schalter oder sonstige elektronische Steuerelemente nachgeordnet sind, die hier nicht dargestellt sind. Diese elektrischen oder elektronischen Elemente sind in einem Gehäuse 21 geschützt und getrennt von dem Gehäuse 1 untergebracht. Die beiden Gehäuse 1 und 21 sind aneinander angeflanscht und das Übertragungselement 13 ist mit Hilfe eines O-Rings 22 durch die beiden benachbarten Wandungen der Gehäuse 1 und 21 hindurchgeführt.

Ausgangsseitig ist jedoch nicht nur das erste Übertragungselement 13, sondern ein weiteres Übertragungselement 23 vorgesehen, welches ebenfalls stift- oder bolzenförmig ausgebildet ist und eine Achse 24 aufweist. Die Achse 24 des Übertragungselements 23 geht bzw. weist durch den Mittelpunkt 6 der Kugel 5. Die Achsen 14 und 24 verlaufen parallel zueinander. Damit sind die beiden Übertragungselemente 13 und 23 in die gleiche Richtung von der Kugel 5 weg weisend vorgesehen, so daß ihre der Kugel abgekehrten Enden jeweils in dem zweiten Gehäuse 21 enden und damit aus dem Gehäuse 1 herausgeführt sind.

Zwischen dem Übertragungselement 13 und der Kugel 5 (und damit auch dem Schalthebel 2) ist ein erstes Verbindungselement 25, das auch als Kupplung bezeichnet werden kann, eingeschaltet. Dieses Verbindungselement 25 wird im wesentlichen durch die bogenförmige Rippe 12 und eine Nut 26 gebildet, die sich an der dargestellten Stelle (Figuren 2 und 3) über einen Teil des Umfangs des stiftförmigen Übertragungselements 13 erstreckt. Zwischen der Rippe 12 und der Nut 26 ist Spiel vorhanden, welches sich je nach Bewegungsrichtung vergrößert, verkleinert oder konstant bleibt. Es ist erkennbar, daß bei einer Bewegung des Schalthebels in der Ebene 1 gemäß den Pfeilen 18 oder 20 sich das Spiel vergrößert, weil das Übertragungselement 13 von der Rippe 12 entweder in die Translationsstellung 16 oder 17 mitgenommen wird. Findet dagegen eine Rotations- bzw. Schwenkbewegung des Schalthebels 2 um die Achse 24 statt, die senkrecht zur Zeichenebene der Figur 2 durch den Mittelpunkt 6 geht, dann verbleibt das Übertragungselement 13 in seiner Stellung und die Rippe 12 gleitet lediglich in der Nut 26 entlang. Das Verbindungselement 25 hat bei dieser Bewegungsrichtung keine Betätigungsfunktion, während er bei einer Schwenkbewegung des Schalthebels 2 in der Ebene I, also um die Achse 19, Betätigungsfunktion hat.

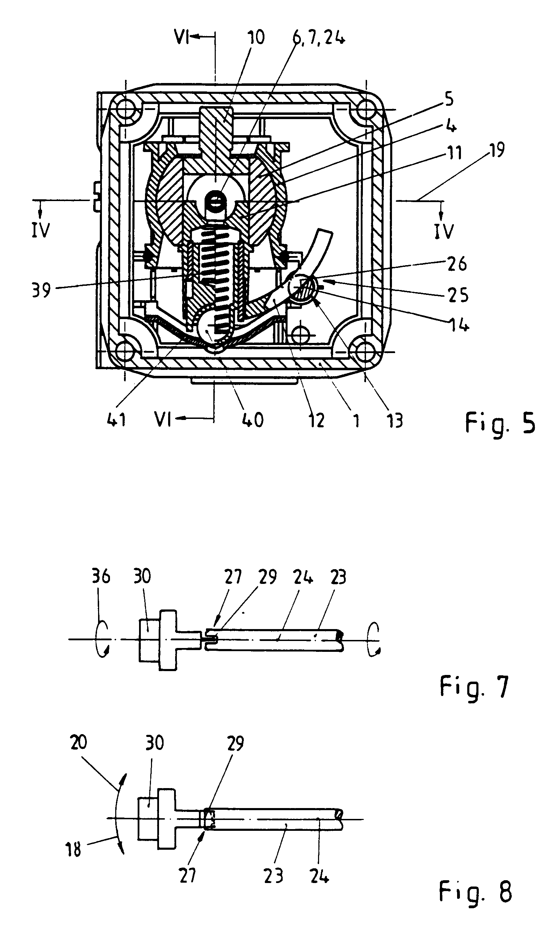

Auch zwischen dem zweiten Übertragungselement 23 und der Kugel 5 bzw. dem Schalthebel 2 ist ein Verbindungselement 27 eingeschaltet. Dieses Verbindungselement 27 ist im Mittelpunkt 6 der Kugel 5 angeordnet. Er kann konstruktiv im wesentlichen aus einer Drehfeder 28 bestehen, wie dies die Figuren 1 bis 6 zeigen. In den Figuren 7 und 8 ist die Ausbildung des Verbindungselements 27 durch ein Gelenk 29 verdeutlicht. Die Drehfeder 28 ist an ihrem einen Ende mit dem Übertragungselement 23 verbunden. Ihr anderes Ende ist an einem Einsatzstück 30 abgestützt und mit diesem Einsatzstück 30 verbunden. Das Einsatzstück 30 ist in die durchbrochene Kugel 5 fixiert eingesetzt, beispielsweise eingeschraubt. Das Verbindungselement 27 hat bei einer Drehbewegung um die Achse 24 Mitnahmefunktion, so daß über die Verdrehung der Kugel 5 um die Achse 24 das Übertragungselement 23 eine Rotationsbewegung durchführt. Bei einer Rotationsbewegung der Kugel 5 um die Achse 19 hingegen knickt die Drehfeder 28 lediglich ab, so daß das Verbindungselement 27 keine Betätigungsfunktion hat. Das zweite Übertragungselement 23 führt dabei keine Rotationsbewegung aus.

Das zweite Übertragungselement 23 ist ohnehin nur dazu ausgebildet und angeordnet, ggf. eine Rotationsbewegung, jedoch keine Translationsbewegung auszuführen. Das Übertragungselement 23 ist durch eine Ausnehmung in der Kugel 5 und eine Durchbrechung 31 im Käfig 4 ebenfalls durch die beiden einander zugekehrten Wandungen der Gehäuse 1 und 21 hindurchgeführt und endet ebenfalls im Innenraum des Gehäuses 21. Ein O-Ring 32 dient der Abdichtung. Auf dem freien Ende des Übertragungselements 23 sitzt ein Schaltarm 33, der nacheinander bei Rotation um die Achse 24 eine Reihe von hier in Figur 1 nur angedeuteten elektrischen Schaltern 34 nacheinander betätigt, die den einzelnen zu schaltenden Gängen bei Vorwärtsfahrt und auch bei Rückwärtsfahrt zugeordnet sind. Das Gehäuse 12 kann noch eine entsprechende Anzahl Leuchtdioden 35 aufweisen, um der Bedienungsperson den betreffenden Gang anzuzeigen.

Der Schalthebel 2 kann jedoch nicht nur die Rotations- bzw. Schwenkbewegung entsprechend den Pfeilen 18 und 20 in der Zeichenebene der Figur 1 um die Achse 19 ausführen, sondern auch eine zweite Rotations- oder Schwenkbewegung um die Achse 24, also in der Zeichenebene der Figur 2 gemäß den Pfeilen 36 und 37. Auch diese Bewegung wird durch die Ausnehmung 8 im Gehäuse 1 begrenzt. Bei einer solchen Drehbewegung hat das Verbindungselement 27 Betätigungsfunktion für das zweite Übertragungselement 23, während das Verbindungselement 25 für das erste Übertragungselement 13 keine Betätigungsfunktion hat. Die eingestellte erste oder zweite Translationsstellung 16 oder 17 des Übertragungselements 13 wird dabei nicht verlassen, sondern das Übertragungselement 23 dreht um die Achse 24, so daß der Schaltarm 33 nacheinander die verschiedenen Schalter 34 betätigt. Dabei kann die Verschwenkrichtung gemäß Pfeil 36 dem Hochschalten der Gänge, also beispielsweise von Gang 2 in Gang 3 usw. zugeordnet sein, während die Verschwenkbewegung gemäß Pfeil 37 dem Herunterschalten zugeordnet ist, also beispielsweise aus dem sechsten zurück in den fünften Gang und entsprechend.

Es sei noch erwähnt, daß die Schaltkulisse anhand der Ausnehmung 8 so ausgebildet ist, daß die Verschwenkbewegung um die Achse 24 nur aus der ersten oder zweiten Translationsstellung 16 oder 17, nicht aber aus der neutralen Mittelstellung 15 heraus möglich ist.

Unterhalb der Kugel 5, also auf der andere Seiten des Schalthebels 2, ist zwischen dem die Rippe 12 tragenden Fortsatzstück 11 und einer Hülse 38 eine Feder 39 eingeschaltet, wobei sich die Hülse 38 auf einer Rastkugel 40 abstützt. Dies ist im einen Halbschnitt dargestellt. Der andere Halbschnitt zeigt eine etwas abgewandelte, jedoch funktional übereinstimmende Ausbildung. Die Rastkugel arbeitet mit einer Gleitschale 41 zusammen, in der vertiefte Rinnen 42 entsprechend der neutralen Mittelstellung 15 und den beiden Translationsstellungen 16 und 17 vorgesehen sind. Durch die Feder 39 wird die Kugel 5 immer an den Käfig 4 angedrückt, so daß sich die Teile immer in einer definierten Relativlage zueinander befinden. Das Einrasten der Rastkugel in der jeweiligen Rinne 42 zeigt der Bedienungsperson an, daß die gewünschte ordnungsgemäße Position erreicht ist.

Die Betätigung und Schaltfolge der mechanischen Schalteinrichtung kann wie folgt ablaufen und der Schaltung des Getriebes einer Baumaschine, z. B. eines Radladers, wie folgt zugeordnet sein:
Aus der neutralen Mittelstellung gemäß den Figuren 1 bis 3 wird der Schalthebel 2 zunächst gemäß Pfeil 18 um die Achse 19 geschwenkt. Dabei verbleibt das Übertragungselement 23 in Ruhe, während das Übertragungselement 13 die Translationsstellung 16 einnimmt. Aus dieser Stellung heraus kann nun der Schalthebel 2 gemäß PFeil 36 (Figur 2) eine zweite Rotationsbewegung durchführen, und zwar um die Achse 24. Dabei wirkt sich am Verbindungselement 25 keine Betätigungsfunktion aus, da die Rippe lediglich durch die Nut 26 hindurchrutscht, jedoch das Übertragungselement 13 in der Translationsstellung 16 verbleibt, während das zweite Übertragungselement 23 über das Verbindungselement 27 unter Betätigungsfunktion gedreht wird. Demgemäß dreht sich auch der Schaltarm 33 und es findet ein Hochschalten der Gänge in der gewünschten Weise statt. So wird beispielsweise von dem ersten in den zweiten Gang hochgeschaltet. Wünscht der Fahrer ein weiteres Hochschalten aus dem zweiten z. B. in den dritten Gang, so verbleibt er mit dem Schalthebel 2 in der verschwenkten Stellung gemäß Pfeil 36 solange, bis nacheinander die betreffenden Gänge hochschalten, was ihm durch die Leuchtdioden 35 angezeigt wird. Ist beispielsweise der fünfte Gang erreicht, den er letztlich erreichen wollte, dann kann er den Schalthebel 2 entgegengesetzt zum Pfeil 36 in die in Figur 2 dargestellte Stellung zurückführen, so daß der fünfte Gang eingeschaltet bleibt. Die Schaltabfolge kann aber auch in anderer Weise verwirklicht werden. So ist es beispielsweise möglich, daß aus einer verschwenkten Stellung gemäß Pfeil 36 der Schalthebel 2 automatisch zurückgeführt wird und sodann für ein weiteres Hochschalten um einen weiteren Gang wiederum eine neue Verschwenkbewegung gemäß Pfeil 36 erforderlich wird. Entsprechendes gilt für das Rückwärtsschalten. Bei dieser zweiten Schaltphilosophie befindet sich der Schalthebel 2 - immer noch bei eingeschalteter erster Translationsstellung 16 - in einer Art Ausgangsstellung zwischen den beiden Verschwenkmöglichkeiten gemäß den Pfeilen 36 und 37, so daß die Bedienungsperson während der Vorwärtsfahrt jeweils die Wahl hat, einen Gang hoch oder einen Gang herunterzuschalten. Ob dann tatsächlich auch die betreffende Gangwahl erfolgt, hängt von anderen Faktoren ab.

Für die Rückwärtsfahrt gilt sinngemäß das gleiche. Damit wird eine für die Bedienungsperson einfache, übersichtliche und folgerichtige Schaltmöglichkeit aufgezeigt, die aus der besonderen Konstruktion der mechanischen Schalteinrichtung resultiert.

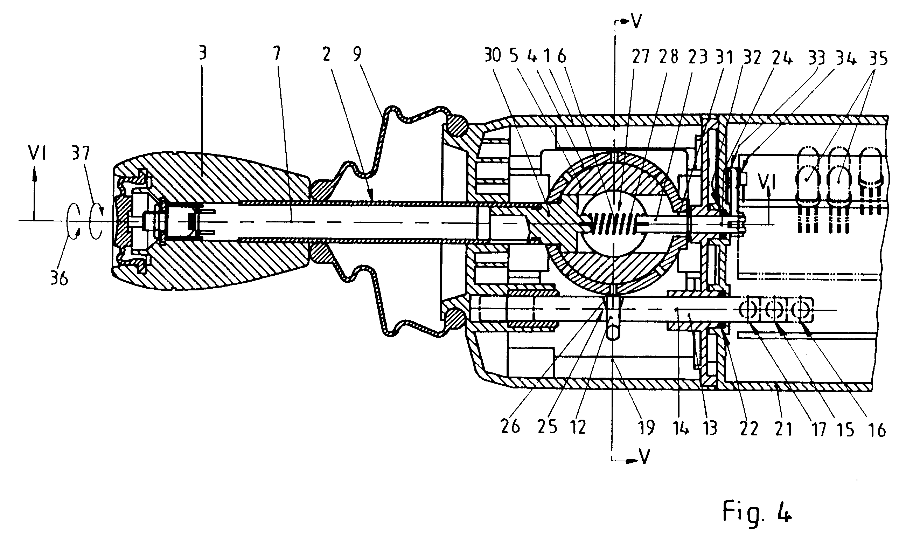

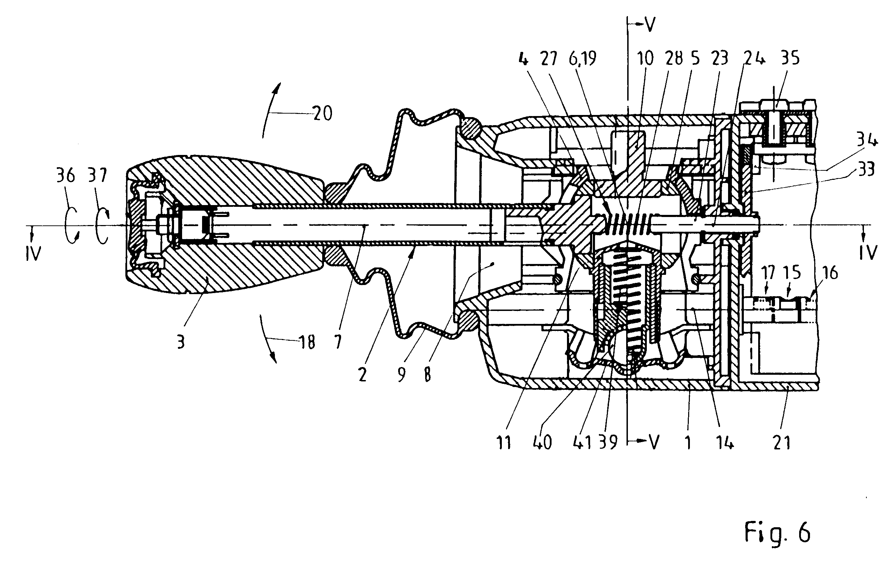

In den Figuren 4 bis 6 ist eine zweite Ausführungsform der mechanischen Schalteinrichtung in drei zueinandergehörigen Schnittdarstellungen dargestellt, wobei die Darstellungen zwar mit denen der Figuren 1 bis 3 nicht sinngemäß in der Folge übereinstimmen, jedoch bereits zu erkennen geben, daß diese zweite Ausführungsform fast mit der ersten Ausführungsform identisch ist bzw. ein Großteil der Einzelteile für beide Ausführungsformen benutzt werden können. Lediglich der Schalthebel 2 ist hier nicht an dem Fortsatz 10, sondern an dem Fortsatz 30 angeordnet, der entsprechend abgewandelt zu dem Fortsatz 30 des Ausführungsbeispiels der Figuren 1 bis 3 vorgesehen ist, so daß sich der Schalthebel 2 hieran befestigen läßt. Die Relativlage und die Ausbildung der beiden ausgangsseitigen Übertragungselemente 13 und 23 ist identisch. Gleichsam greift somit hier nur der Schalthebel 2 an einer anderen Stelle der Kugel an, und zwar so, daß die Achsen 7 und 24 zusammenfallen. Die anhand der Figur 1 verdeutlichte erste Schwenkbewegung gemäß den Pfeilen 18 und 20 um die Achse 19 ist hier in Figur 6 dargestellt. Durch die andere Anordnung des Schalthebels 2 relativ zur Kugel 5 ergibt sich die zweite Rotationsbewegung des Schalthebels 2 zu einer solche um seine eigene Achse 7 bzw. 24. Dies ist in Figur 6 und in Figur 4 dargestellt. Somit reduziert sich hier die Ausbildung der Ausnehmung 8 zu einem langlochartigen Schlitz gemäß Figur 6. Auch hier ergibt sich eine sinnfällige und für die Bedienungsperson leicht überschaubare Schaltmöglichkeit, indem beispielsweise die Rotationsbewegung gemäß Pfeil 18 der Vorwärtsfahrt, gemäß Pfeil 20 der Rückwärtsfahrt, gemäß Pfeil 36 dem Hochschalten und gemäß Pfeil 37 dem Herunterschalten zugeordnet sind. Auch hier ist verständlicherweise die Ausbildung der Verbindungselemente 25 und 27 immer so durchgeführt, daß dann, wenn das eine Verbindungselement Betätigungsfunktion hat, das andere Verbindungselement Betätigungsfunktion hat und umgekehrt.

In den Figuren 7 und 8 ist eine andere Ausbildung des Verbindungselements 27 verdeutlicht. Es ist hier nur das zweite Übertragungselement 23 und das Einsatzstück 30 relativ zum Mittelpunkt der Kugel dargestellt. Man erkennt, daß anstelle einer Drehfeder 28 ein Gelenk 29 verwirklicht ist, welches aus einer vorspringenden Platte an dem Einsatzstück 30 und einem entsprechenden Schlitz in dem Übertragungselement 23 besteht. Bei einer Rotationsbewegung gemäß Pfeil 36 hat das Verbindungselement 27 Betätigungsfunktion, während eine Rotationsbewegung in Richtung der Pfeile 18 oder 20 keine Betätigungsfunktion nach sich zieht. Anstelle der Drehfeder 28 oder des Gelenks 29 könnte auch ein Abschnitt eines Gummischlauchs eingesetzt werden, um damit das Verbindungselement 27 zu realisieren.

## Patentansprüche

1. Mechanische Schalteinrichtung mit einem Gehäuse (1) und einer darin in einem Käfig (4) gelagerten Kugel (5), an der ein eingangsseitiger Schalthebel (2) radial abstehend angeordnet und starr befestigt ist, der zusammen mit der Kugel (5) zwei Rotationsbewegungen um aufeinander senkrecht stehende, durch den Mittelpunkt (6) der Kugel (5) gehende Achsen (19, 24) ausführen kann, wobei ausgangsseitig zwei separate Übertragungselemente (13, 23) vorgesehen sind, die stiftförmig ausgebildet, mit ihren Achsen (14, 24) parallel zueinander angeordnet und mit der Kugel (5) über je ein Verbindungselement (25, 27) verbunden sind, wobei die beiden Verbindungselemente (25, 27) so ausgebildet und zueinander angeordnet sind, daß das erste Verbindungselement (25) bei der Rotationsbewegung des Schalthebels (2) um die eine Achse (24) das erste Übertragungselement (13) betätigt und gleichzeitig das zweite Verbindungselement (27) das zweite Übertragungselement (23) nicht betätigt, während es bei der zweiten Rotationsbewegung des Schalthebels (2) um die andere Achse (19) umgekehrt ist, **dadurch gekennzeichnet, daß** das zweite Übertragungselement (23) mit seiner Achse (24) durch den Mittelpunkt (6) der Kugel (5) weisend angeordnet ist, daß das Verbindungselement (27) dieses zweiten Übertragungselements (23) im Bereich des Mittelpunkts (6) der Kugel (5) angeordnet ist, und daß das erste Übertragungselement (13) eine Translationsbewegung in Richtung seiner Achse (14) und das zweite Übertragungselement (23) eine Rotationsbewegung um seine Achse (24) ausführt.

2. Schalteinrichtung nach Anspruch 1, **dadurch gekennzeichnet, daß** das Verbindungselement (27) des zweiten Übertragungselements (23) als Gelenk (29), als Drehfeder (28) oder als Faltenbalg ausgebildet ist.

3. Schalteinrichtung nach Anspruch 1 oder 2, **dadurch gekennzeichnet, daß** das erste Übertragungselement (13) mit seiner Achse (14) außerhalb des Mittelpunkts (6) der Kugel (5) angeordnet ist, und daß das zugehörige erste Verbindungselement (25) dieses Übertragungselements zwischen der Oberfläche der Kugel (5) und dem ersten Übertragungselement (13) eingeschaltet ist.

4. Schalteinrichtung nach Anspruch 3, **dadurch gekennzeichnet, daß** das Verbindungselement (25) des ersten Übertragungselements (13) von einer bogenförmigen Rippe (12) auf der Oberfläche der Kugel (5) und einer Nut (26) in dem ersten Übertragungselement (13) gebildet ist, wobei die Achse der bogenförmigen Rippe (12) mit der Achse (24) des zweiten Übertragungselements (23) zusammenfällt.

5. Schalteinrichtung nach Anspruch 3, **dadurch gekennzeichnet, daß** die bogenförmige Rippe (12) als gesondertes Teil mit der Kugel (5) verbunden ist und auf einem größeren Radius als die Innenseite des Käfigs (4) angeordnet ist.

6. Schalteinrichtung nach einem oder mehreren der Ansprüche 1 bis 5, **dadurch gekennzeichnet, daß** die Kugel (5) zwei Fortsätze (10, 30) zur wahlweisen Verbindung mit dem Schalthebel (2) aufweist, deren Achsen (7, 24) um 90° gegeneinander versetzt angeordnet sind.

7. Schalteinrichtung nach einem oder mehreren der Ansprüche 1 bis 6, **dadurch gekennzeichnet, daß** die beiden Übertragungselemente (13, 23) durch eine Wandung des Gehäuses (1) der Schalteinrichtung dichtend hindurchgeführt sind.

8. Schalteinrichtung nach einem oder mehreren der Ansprüche 1 bis 7, **dadurch gekennzeichnet, daß** die Kugel (5) auf einer Feder (39) abgestützt ist, deren der Kugel abgekehrtes Ende beweglich am Gehäuse (1) in Rastvertiefungen geführt ist.

## Claims

1. Mechanical switching device having a housing (1) and a ball (5) supported within the housing (1) in a retainer (4); a radially extending control lever (2) is arranged at the input side and rigidly fixed on the ball (5); the control lever together with the ball (5) can perform two rotational movements about axes (19, 24) which are perpendicular to each other and pass through the mid-point (6) of the ball (5); two separate transmission elements (13, 23) are provided at the output side which are constructed pin-shaped, the axes of which are arranged parallel to each other, and which are each coupled with the ball via a connection element (25, 27); the two connection elements are constructed and arranged relativ to each other in such a way that with a rotational movement of the control lever (2) about the one axis (24) the first connection element (25) actuates the first transmission element (13) and the second connection element (27) does not actuate the second transmission element (23) at the same time, while the situation is reversed with the second rotational movement of the control lever (2) about the other axis (19), **characterized in that** the second transmission element (23) is arranged with its axis (24) directed through the mid-point (6) of the ball (5), and that the first transmission element (13) performs a translation movement in the direction of its axis (14) and the second transmission element (23) performs a rotational movement about its axis (24).

2. Switching device according to claim 1, characterized in that the connection element (27) of the second transmission element (23) is constructed as an articulated joint (29), as a torsion spring (28) or as a folding bellow.

3. Switching device according to claim 1 or 2, characterized in that the first transmission element (13) is arranged with its axis (14) outside the mid-point (6) of the ball (5), and that the corresponding first connection element (25) of this transmission element is interpolated between the surface of the ball (5) and the first transmission element (13).

4. Switching device according to claim 3, characterized in that the first connection element (25) of the first transmission element (13) is formed by an arc-shaped rib (12) on the surface of the ball (5) and by a groove (26) in the first transmission element (13), wherein the axis of the arc-shaped rib (12) and the axis (24) of the second transmission element (23) coincide.

5. Switching device according to claim 3, characterized in that the arc-shaped rib (12) is connected to the ball (5) as a separate part and is arranged at a radius larger than the inner surface of the retainer (4).

6. Switching device according to one or several of the claims 1 to 5, characterized in that the ball (5) comprises to protrusions (10, 30) for the alternative connection to the control lever (2), the axes (7, 24) of which are arranged offset at 90° to each other.

7. Switching device according to one or several of the claims 1 to 6, characterized in that the two transmission elements (13, 23) are fed through a wall of the housing (1) of the switching device in a sealed manner.

8. Switching device according to one or several of the claims 1 to 7, characterized in that the ball (5) is supported by a spring (39) whose end directed away from the ball is movably guided on the housing (1) in indents.

## Revendications

1. Mécanisme de commande comportant un boîtier (1) et une rotule (5) montée dans ce boîtier dans une cage (4), sur laquelle rotule est disposé sur le côté d'entrée un levier (2) de commande s'écartant radialement et fixé à la rotule de manière rigide, qui peut exécuter, ensemble avec la rotule (5), deux mouvements de rotation autour d'axes (19, 24) perpendiculaires l'un à l'autre, passant par le centre (6) de la rotule (5), deux éléments de transmission (13, 23) séparés étant prévus sur le côté de sortie, qui sont en forme de broches, avec leurs axes (14, 24) disposés parallèlement l'un à l'autre et sont reliés à la rotule (5) chacun par un élément de liaison (25, 27), les deux éléments de liaison (25, 27) étant conformés et disposés, l'un par rapport à l'autre, de telle sorte que le premier élément de liaison (25), lors du mouvement de rotation du levier de commande (2) autour de l'axe (24), actionne le premier élément de transmission (13) et, en même temps, le deuxième élément de liaison (27) n'actionne pas le deuxième élément de transmission (23), tandis que, lors du deuxième mouvement de rotation du levier de commande (2) autour de l'autre axe (19), c'est l'inverse,
**caractérisé** en ce que le deuxième élément de transmission (23) est disposé avec son axe (24) dirigé vers le centre (6) de la rotule (5), en ce que l'élément de liaison (27) de ce deuxième élément de transmission (23) est disposé dans la zone du centre (6) de la rotule (5), et en ce que le premier élément de transmission (13) exécute un mouvement de translation dans le sens de son axe (14) et que le deuxième élément de transmission (23) exécute un mouvement de rotation autour de son axe (24).

2. Mécanisme de commande selon la revendication 1, caractérisé en ce que l'élément de liaison (27) du deuxième élément de transmission (23) est réalisé sous la forme d'une articulation (29) ou d'un ressort rotatif (28) ou d'un soufflet.

3. Mécanisme de commande selon la revendication 1 ou 2, caractérisé en ce que le premier élément de transmission (13) est disposé avec son axe (14) en dehors du centre (6) de la rotule (5), et en ce que le premier élément de liaison (25) correspondant à cet élément de transmission est intercalé entre la surface externe de la rotule (5) et le premier élément de transmission (13).

4. Mécanisme de commande selon la revendication 3, caractérisé en ce que l'élément de liaison (25) du premier élément de transmission (13) est constitué par une ailette arquée (12) sur la surface externe de la rotule (5) et par une rainure (26) dans le premier élément de transmission (13), l'axe de l'ailette arquée (12) coincidant avec l'axe (24) du deuxième élément de transmission (23).

5. Mécanisme de commande selon la revendication 3, caractérisé en ce que l'ailette arquée (12) est reliée sous la forme d'une pièce séparée à la rotule (5) et est disposée sur un rayon plus grand que celui de la face interne de la cage (4).

6. Mécanisme de commande selon une ou plusieurs des revendications 1 à 5, caractérisé en ce que la rotule (5) présente deux appendices (10, 30) pour une liaison sélective avec le levier de commande (2), dont les axes (7, 24) sont décalés de 90°, l'un par rapport à l'autre.

7. Mécanisme de commande selon une ou plusieurs des revendications 1 à 6, caractérisé en ce que les deux éléments de transmission (13, 23) traversent de manière étanche une paroi du boîtier (1) du dispositif de commande.

8. Mécanisme de commande selon une ou plusieurs des revendications 1 à 7, caractérisé en ce que la rotule (5) prend appui sur un ressort (39) dont l'extrémité opposée à la rotule est guidée de manière mobile dans le boîtier (1) dans des encoches de retenue.
